# FASCICULE DE BREVET EUROPEEN

(11) **EP 0 961 151 B1**
(45) Date de publication et mention de la délivrance du brevet: **14.08.2002**
(21) Numéro de dépôt: 99401226.8
(22) Date de dépôt: 21.05.1999
(51) Int. Cl.: G02B 26/08

(54) **Actionneur optique permettant d'amener un faisceau de lumière incidente sur une surface fixe extérieure audit actionneur**
Optisches Stellglied zur Führung eines einfallenden Lichtstrahls auf eine sich ausserhalb des Stellglieds befindliche, feststehende Oberfläche
Optical actuator to conduct an incident light beam on a fixe surface situated outside said actuator

(30) Priorité: 25.05.1998 FR 9806536
(43) Date de publication de la demande: 01.12.1999
(73) Titulaire: CSEM Centre Suisse d'Electronique et de Microtechnique S.A. Recherche et Développement, 2007 Neuchâtel (CH)
(72) Inventeur: Genequand, Pierre-Marcel, 1209 Genève (CH)
(74) Mandataire: Colas, Jean-Pierre

(56) Documents cités:
- WO-A-97/48001
- DE-U- 8 810 960

## Description

La présente invention est relative à un actionneur permettant d'amener un faisceau de lumière incidente sur une surface fixe extérieure audit actionneur et selon un angle d'incidence variable.

Sans que l'invention n'y soit nullement limitée, un actionneur de ce type peut être nécessaire par exemple dans un analyseur comportant une cellule dans laquelle se trouve un échantillon biochimique à analyser, la mesure devant se faire à l'aide de l'éclairement à travers une pupille fixe, par un faisceau devant pouvoir frapper l'échantillon sous un angle variable. Dans un tel analyseur, la cellule doit se trouver à un endroit qui ne doit pas être encombré par les moyens produisant et/ou conduisant le faisceau mobile. En outre, la cellule contenant l'échantillon doit pouvoir être manipulée sans interaction avec le dispositif qui éclaire l'échantillon.

Les dispositifs connus permettant de dévier un faisceau lumineux avec un angle variable ne sont pas appropriés pour atteindre le but susvisé.

Par exemple, on connaît bien les miroirs oscillants sur lesquels on dirige un faisceau lumineux et qui renvoie le faisceau sous un angle double de celui sous lequel il frappe le miroir. En faisant pivoter le miroir autour d'un axe situé dans son propre plan, on peut alors imprimer au faisceau une direction variable éventuellement de façon dynamiquement oscillante si le miroir est animé d'un mouvement de va-et-vient continu. Cependant, dans un tel agencement, la pupille par où passe le faisceau se trouve nécessairement sur le miroir lui-même. On ne peut donc l'appliquer à un analyseur tel que décrit ci-dessus, car le miroir encombrerait la cellule d'analyse et l'échantillon ne pourrait être manipulé convenablement.

Un exemple d'un tel dispositif est décrit dans WO 97/48001.

L'invention a pour but de fournir un actionneur du type général indiqué ci-dessus permettant de satisfaire la double exigence de pouvoir être placé à un endroit éloigné de la pupille par où le faisceau doit passer et de ne pas encombrer cet endroit.

L'invention a donc pour objet un actionneur destiné à diriger sous un angle d'incidence variable, un faisceau provenant d'une source lumineuse sur une pupille placée dans une région prédéterminée de l'espace, comprenant
- une embase fixe,
- des moyens de support montés mobiles par rapport à cette embase,
- des moyens optiques de pointage dudit faisceau placés sur le trajet de celui-ci entre ladite source et ladite pupille et portés par lesdits moyens de support, et
- des moyens moteurs connectés auxdits moyens de support pour déplacer ces derniers d'une manière commandée,
caractérisé
- en ce que ladite embase et lesdits moyens de support mobiles sont connectés les uns aux autres par l'intermédiaire d'au moins une paire de lames flexibles formant avec eux une monture sensiblement plane définissant un plan général,
- en ce que les lames flexibles de ladite paire sont alignées respectivement sur deux axes concourant à partir de ladite embase vers un point d'intersection situé dans ledit plan, lesdites lames étant connectées auxdits moyens de support en deux points respectifs intermédiaires entre ladite embase et le point d'intersection desdites droites, et
en ce que lesdits moyens de pointage sont agencés pour dévier ledit faisceau de manière variable dans un plan qui est parallèle au plan de ladite monture par déplacement desdits moyens de support.

Grâce à ces caractéristiques, la pupille peut être éclairée par le faisceau lumineux sous un angle variable par action sur lesdits moyens de support, l'ensemble de l'actionneur pouvant être éloigné de la région de l'espace dans laquelle le faisceau lumineux provoque son effet, sans encombrer cet espace.

Avantageusement, la paire de lames définit avec l'embase et les moyens de support, un quadrilatère dans le plan général de la monture, celle-ci pouvant facilement être fabriquée en une matière moulée ou usinée de manière simple. Le quadrilatère peut être un trapèze ou selon une réalisation particulièrement avantageuse un trapèze isocèle.

Une structure s'étant avérée commode à réaliser et à appliquer en pratique comprend des moyens de pointage optique formés d'un miroir porté par les moyens de support et orienté dans un plan perpendiculaire au plan général de la monture.

Les moyens de support peuvent comprendre une portion de liaison connectée entre deux extrémités des lames, tandis que le miroir peut être monté sur un appendice solidaire de la portion de liaison et s'étendant entre les lames en direction de l'embase.

Un mode de réalisation particulièrement avantageux permettant d'obtenir, moyennant un encombrement minimal, un angle d'éclairement de la pupille particulièrement important, comprend des lames flexibles formant une paire de premières lames, et une paire de secondes lames flexibles situées également dans le plan de la monture et dont les axes passent par le point d'intersection des premières lames flexibles, ces secondes lames étant connectées aux moyens de support et s'étendant à partir de ceux-ci en direction de l'embase où elles sont connectées l'une à l'autre par une traverse mobile dont sont solidaires les moyens de pointage optique et lesdits moyens moteurs.

Selon un autre mode de réalisation avantageux qui procure une souplesse de construction appréciable de l'actionneur selon l'invention, lesdits moyens de pointage optique comprennent un guide de lumière, tel qu'une fibre optique dont l'une des extrémités est connectée à ladite source de lumière et dont l'autre extrémité est fixée sur lesdits moyens de support en alignement avec une lentille convergente, et ladite autre extrémité du guide de lumière et ladite lentille définissant un axe optique situé dans le plan de ladite monture de manière à être aligné sur ladite pupille.

L'emploi d'un guide de lumière pour amener le faisceau lumineux dans l'actionneur permet également de construire un actionneur dans lequel la pupille peut être illuminée à partir de points répartis spatialement sur une portion de sphère.

Ainsi, conformément à un autre mode de réalisation, l'invention a pour objet un actionneur destiné à diriger sous un angle d'incidence variable (α), un faisceau de lumière provenant d'une source lumineuse sur une pupille placée dans une région prédéterminée de l'espace, comprenant:
- une embase fixe,
- des moyens de support montés mobiles par rapport à cette embase,
- des moyens moteurs connectés auxdits moyens de support pour déplacer ces derniers d'une manière commandée,
- ladite embase et lesdits moyens de support mobiles étant connectés les uns aux autres par l'intermédiaire de quatre lames flexibles qui sont alignées respectivement sur quatre axes situés sur les arêtes d'une pyramide à base carrée au sommet de laquelle est située ladite pupille, lesdites lames étant connectées auxdits moyens de support en quatre points respectifs intermédiaires entre ladite embase et le sommet de ladite pyramide et
- des moyens de pointage optique comprenant un guide de lumière, tel qu'une fibre optique dont l'une des extrémités est connectée à ladite source de lumière et dont l'autre extrémité est fixée sur lesdits moyens de support en alignement avec une lentille convergente, ladite autre extrémité du guide de lumière et ladite lentille définissent un axe optique situé dans le plan de ladite monture de manière à être aligné sur ladite pupille de telle sorte que lesdits moyens de pointage puissent être déplacés selon une portion de sphère.

D'autres caractéristiques et avantages de l'invention apparaîtront au cours de la description qui va suivre, donnée uniquement à titre d'exemple et faite en se référant aux dessins annexés sur lesquels:
- la figure 1 représente schématiquement une vue de face d'un actionneur conçu suivant un premier mode de réalisation de l'invention;
- la figure 2 est un diagramme géométrique illustrant la conception de l'actionneur de la figure 1;
- la figure 3 représente une vue en perspective d'un autre mode de réalisation de l'invention;
- les figures 4 et 5 montrent de façon simplifiée la structure des montures des actionneurs représentés respectivement sur les figures 1 et 3;
- la figure 6 est un schéma de principe d'un mode de réalisation, dans lequel le faisceau de lumière incidente est issu d'une fibre optique dont l'extrémité est solidaire de l'actionneur;
- la figure 7 représente une variante de l'invention selon laquelle les moyens de pointage peuvent être commandés selon deux directions perpendiculaires.

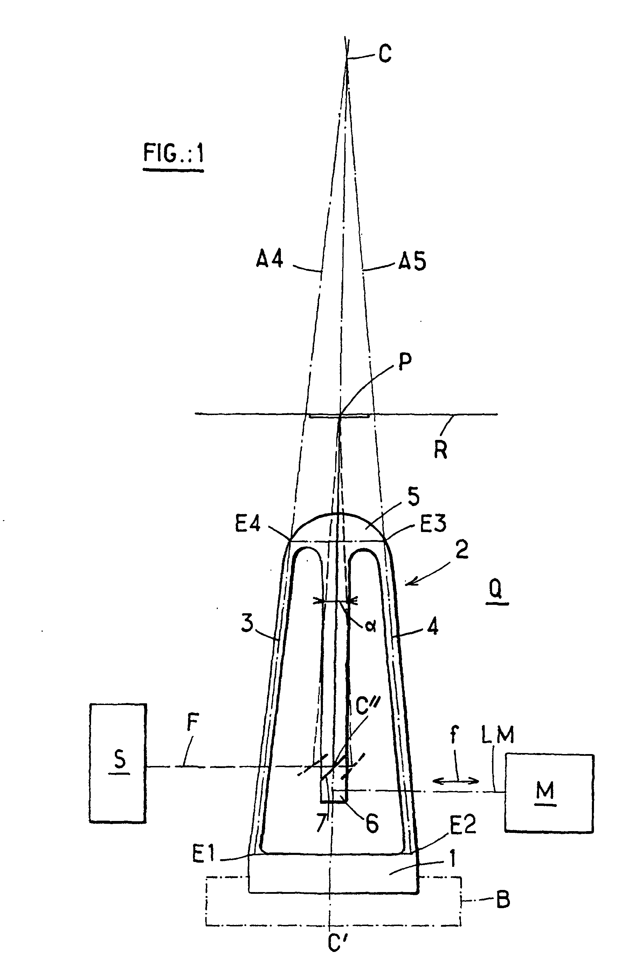

Le mode de réalisation de l'actionneur selon l'invention représenté schématiquement à la figure 1, est destiné, à titre d'exemple, à diriger un faisceau lumineux F provenant d'une source de lumière S sur une région R de l'espace, plus précisément sur une pupille cible P de cette région de l'espace. L'actionneur permet de pointer le faisceau lumineux F sur la pupille cible P avec un angle d'incidence variable α, de préférence de façon réglable en continu ou variable dynamiquement. Sur la figure, on n'a représenté du faisceau F que le rayon central frappant le point central de la pupille cible P.

Pour fixer les idées, une application particulièrement appropriée de l'invention telle qu'elle est illustrée sur la figure 1, est celle dans laquelle une cellule d'analyse biochimique est placée dans la région R, le lieu de l'analyse étant situé sur la zone correspondant à la pupille cible P et l'analyse nécessitant un éclairement par le faisceau F sous un angle devant pouvoir varier ou du moins être ajustable. En particulier, une telle cellule peut comprendre un réseau de diffraction sur lequel est placé l'échantillon biologique à analyser. La cellule d'analyse biochimique ne faisant pas partie de l'invention, elle n'est ni représentée ni décrite ici. La source de lumière S peut être un laser à semi-conducteur, par exemple.

Il est à noter que l'attitude dans l'espace de l'actionneur selon l'invention n'est pas déterminante pour son fonctionnement, l'attitude représentée sur les figures n'étant donc que purement arbitraire.

L'actionneur proprement dit comprend une embase 1 qui peut être solidaire d'un bâti B plus important (symbolisé en traits mixtes) sur lequel sont montés tous les composants de l'appareil de mesure auquel appartient l'actionneur. En l'occurrence, l'embase est supposée être insérée dans une fente pratiquée dans le bâti B.

L'embase 1 fait partie d'une monture 2 ayant la forme générale d'une plaque ajourée dont le plan général Q correspond au plan du dessin de la figure 1.

La monture 2 comprend également une paire de lames flexibles 3 et 4. Ces lames, qui doivent être flexibles selon une direction appartenant au plan Q et rigides selon toute autre direction, ont de préférence une section transversale rectangulaire ou carrée et leurs axes longitudinaux A-4 et A-5 sont situés dans le plan Q défini par la plaque de la monture 2. Les lames s'étendent respectivement à partir de l'embase 1 de telle manière que leurs axes A4 et A5 concourent en un point C de l'espace que l'on appellera centre de pivotement C par la suite.

La monture 2 comprend également une portion de liaison 5 formant des moyens de support. Dans le mode de réalisation représenté, cette portion de liaison relie entre elles les extrémités des lames 3 et 4. Sa forme n'est pas déterminante. Dans l'exemple représenté, elle présente un bord extérieur arqué.

Cette portion de liaison 5 matérialise des moyens de support en ce sens qu'elle présente un appendice 6 sur lequel est monté un miroir plan 7.

On peut ainsi considérer que les lames flexibles 3 et 4, l'embase 1 et la portion de liaison 5 définissent ensemble un quadrilatère dont les sommets E1 à E4 sont des points des axes des lames flexibles 3 et 4. Dans le présent cas, les lames sont d'égale longueur et leurs axes font des angles égaux avec le côté du quadrilatère joignant respectivement les sommets E1; E2 et E3; E4. De ce fait, le quadrilatère E1-E4 est un trapèze isocèle ayant un axe de symétrie C-C'.

L'appendice 6 s'étend entre les lames 3 et 4 à partir de la portion de liaison 5 en direction de l'embase 1 et le miroir plan 7 s'étend perpendiculairement au plan Q de la monture 2. Il est incliné de 45° par rapport à l'axe de symétrie C-C', son centre optique étant désigné par C". Le miroir 7 s'étend hors du plan général Q de la monture 2 (c'est-à-dire vers l'observateur qui regarde la figure 1 dans l'exemple représenté).

Par ailleurs, l'appendice 6 est solidaire d'une liaison mécanique LM symbolisée par une ligne en pointillés sur la figure 1. Cette liaison mécanique LM est connectée à un dispositif moteur M capable de tirer ou de repousser l'appendice 6 et par conséquent de déplacer le miroir 7 dans le sens de la flèche f. La liaison LM peut être une tige ou de préférence, l'appendice 6 peut comporter une plaquette métallique associée à un circuit magnétique pourvu d'une bobine d'excitation et dans l'entrefer duquel la plaquette peut évoluer par variation du courant dans la bobine, pour déplacer l'appendice 6 dans la direction de la flèche f. D'autres moyens moteurs peuvent être utilisés.

La matière et le dimensionnement de la monture sont choisis de telle manière que les lames 3 et 4 présentent une rigidité élevée dans une direction perpendiculairement au plan Q, mais ont au contraire une faculté de déformation, éventuellement élastique, dans le plan Q ou parallèlement à ce plan. Ceci revient à dire qu'une traction ou une poussée exercée sur l'appendice 6 par le dispositif moteur M dans la direction de la flèche f déplacera le centre optique C'' du miroir 7 sur une courbe circulaire ayant pour centre le centre de pivotement C. Par conséquent, si le miroir est éclairé par la source de lumière S le faisceau lumineux F frappera la région R dans la pupille P et ce sous un angle variable dont l'excursion peut être égale à l'angle α. On notera que le rayon central du faisceau se trouve décalé par rapport au plan de la monture tout d'ailleurs comme le centre de la pupille P.

Dans le mode de réalisation de la figure 1, la monture est réalisée de préférence en une seule pièce moulée ou éventuellement usinée (au laser ou par électroérosion, par exemple) en matière plastique ou en métal. Toutefois, il est envisageable également de composer la monture de quatre éléments distincts (l'embase, la portion de liaison et les deux lames), et de prévoir des articulations, aux quatre angles du quadrilatère E1 à E4.

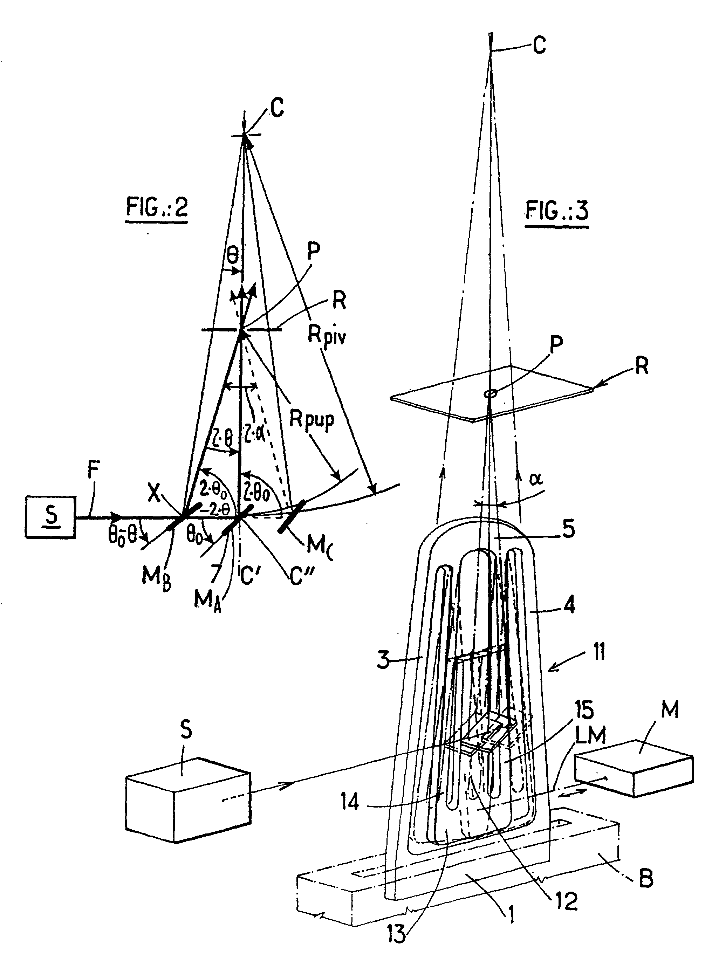

La figure 2 illustre la démonstration théorique du comportement de l'actionneur tel qu'il vient d'être décrit.

Le faisceau F incident provenant de la source S est représenté par son rayon central. Le centre C" du miroir frappé par ce rayon central à partir de la source S se trouve à une distance Rₚᵢᵥ du centre de pivotement C situé sur un axe de pivotement virtuel qui est perpendiculaire au plan Q de la figure 2.

Dans la position intermédiaire M_{A} du miroir 7, le rayon central du faisceau F frappe ce dernier sous un angle θₒ qui est choisi égal à 45°, par exemple. Par conséquent, le rayon incident est réfléchi par le miroir 7 pour faire un angle de 2θ₀=90° avec lui. Ainsi, il éclaire la pupille P sous un angle égal à 90° par rapport au plan de la région R.

Lorsque le miroir est déplacé par le dispositif moteur M (figure 1), vers la position M_{B} sur un angle -θ, par exemple égal à la moitié de l'angle α, il fera un angle de θ₀-θ avec le rayon incident. A la sortie du miroir 7, le rayon émergent fera donc un angle 2θ₀-2θ avec le rayon incident.

Si on appelle X le point où se trouvera le centre C" du miroir 7 dans la position M_{B}, on constate que le segment tracé entre le centre C" dans la position M_{A} et le point X est commun aux deux triangles respectivement formés avec d'une part les segments C"C et XC qui font entre eux l'angle θ de pivotement du miroir 7 et d'autre part les rayons émergents obtenus respectivement pour les positions M_{A} et M_{B}, ces rayons faisant un angle entre eux de 180°-(180°-2θ₀+2θ₀-2θ) = 2θ.

Il en résulte que pour de petits angles de pivotement du miroir 7, quelle que soit la position de ce dernier, pour toute position du miroir 7 entre les positions MB et MC, les rayons centraux émergents passent tous par un point unique situé à une distance du centre du miroir qui est la moitié du rayon de pivotement C-C". Il suffit donc de faire coïncider ce point avec le centre de la pupille P pour obtenir l'effet recherché.

La figure 3 représente par une vue en perspective schématique un actionneur selon l'invention dans la forme actuellement préférée.

Dans ce cas, l'actionneur comprend une monture 11 également en forme de plaque ajourée avec une embase 1, une portion de liaison 5 et deux lames flexibles latérales 3 et 4, le tout présentant une forme globale en trapèze isocèle.

Cependant, à la différence du mode de réalisation représenté sur la figure 1, la monture 11 comporte pour supporter le miroir 7, non pas un appendice directement attaché à la portion de liaison 5, mais un appendice 12 s'étendant à partir d'une seconde portion de liaison 13 connectée à son tour à la portion de liaison 5 par l'intermédiaire d'une paire de secondes lames flexibles 14 et 15.

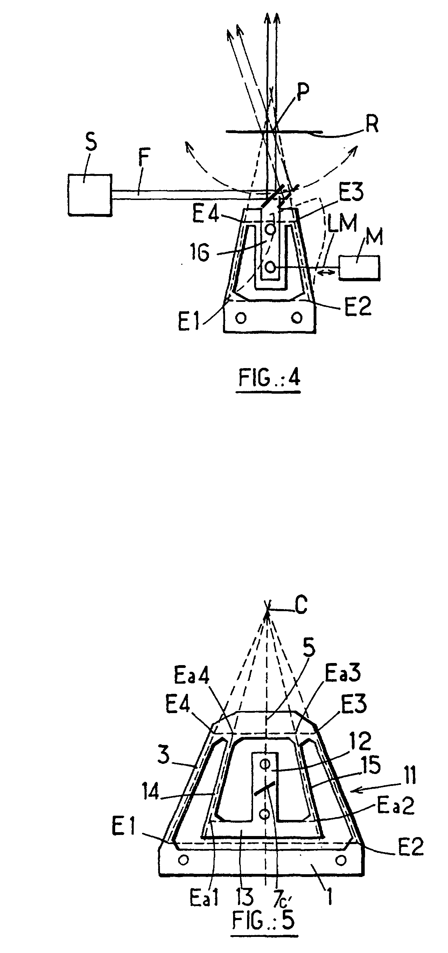

Ces secondes lames flexibles 14 et 15 sont situées dans le plan de la monture 11 et orientées de telle manière que par les extrémités de leurs axes, elles définissent un quadrilatère Ea1 à Ea4, les axes ayant un point d'intersection qui coïncide avec le point d'intersection C des axes des premières lames 3 et 4 (voir en particulier la figure 5). On voit que dans ce mode de réalisation, les deux quadrilatères E1 à E4 et Ea1 à Ea4 sont des trapèzes isocèles.

Le principe de fonctionnement de ce deuxième mode de réalisation de l'invention est analogue à celui du premier mode de réalisation. Il présente l'avantage de permettre une course angulaire du miroir 7 plus importante et de réduire les distorsions de déplacement dues à la déformation des lames flexibles 3, 4, 14 et 15.

Dans le cas de la figure 3, la force motrice du dispositif moteur M est appliquée à la portion de liaison 13.

Les figures 4 et 5 reprennent par des dessins simplifiés la structure des actionneurs suivant les figures 1 et 3. On voit sur la figure 4 que le miroir 7 peut être monté sur un bloc de support 16 fixé sur l'appendice 6, montage qui peut être repris dans la variante de la figure 5. Cette construction permet de monter le miroir 7 au-dessus de la monture 2 (ou de la monture 11) ce qui peut faciliter la conduite du faisceau lumineux F, tout en maintenant dégagée la région R dans laquelle se trouve la pupille P

La figure 4 illustre également de façon très exagérée par des traits pointillés, la déformation des lames flexibles lorsque les moyens moteurs M sont commandés (dans ce cas vers la droite).

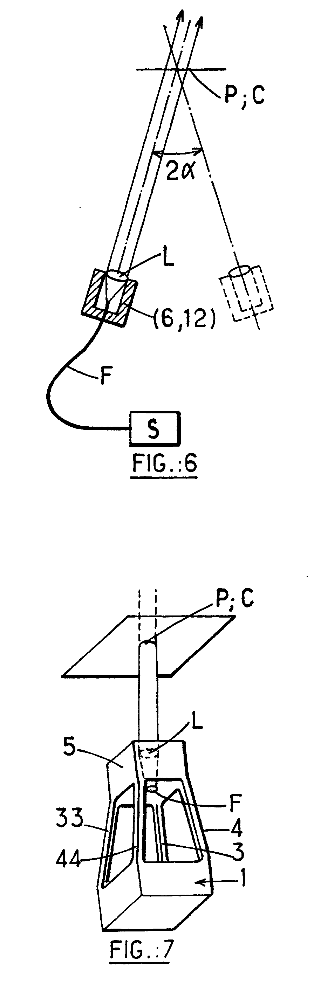

L'invention n'est pas limitée aux modes de réalisation décrits précédemment. C'est ainsi qu'en tant que moyens de pointage du faisceau F, on pourrait utiliser un guide de lumière, tel qu'une fibre optique, associé à une lentille convergente (voir la figure 6). L'une des exrémités de ce guide de lumière est raccordée à la source lumineuse S, son autre extrémité étant montée, en alignement avec la lentille convergente L, sur les moyens de support 6 ou 12. La direction de l'axe optique défini par cette autre extrémité et la lentille passe par le point d'intersection C des lames flexibles. Dans ce cas, ce point d'intersection ou centre de rotation C des moyens de pointage correspond au centre de la pupille P. La figure 6 montre schématiquement de tels moyens de pointage où seuls l'appendice 6, 12, une fibre F, une lentille L, une source de lumière S et la pupille P ont été représentés.

Une autre variante de l'invention est montrée à la figure 7, laquelle représente un actionneur comportant une monture double réalisée à l'aide de quatre lames flexibles 3, 4, 33 et 44 orientées les unes par rapport aux autres selon les arêtes d'une pyramide tronquée à base carrée. Cet actionneur permet au dispositif de pointage, associé à une fibre optique 7 et à une lentille convergente L, d'être déplacé sur une portion de sphère. Les moyens de pointage pourront être associés à deux moteurs (non représentés) agissant sur la partie 5 selon deux directions perpendiculaires. Là encore, le centre de rotation C des moyens de pointage se confond avec le centre de la pupille P.

## Revendications

1. Actionneur destiné à diriger sous un angle d'incidence variable (α), un faisceau de lumière (F) provenant d'une source lumineuse (S) sur une pupille (P) placée dans une région prédéterminée (R) de l'espace, comprenant:
- une embase fixe (1),
- des moyens de support (5, 6) montés mobiles par rapport à cette embase (1),
- des moyens optiques de pointage (7) dudit faisceau placés sur le trajet de celui-ci entre ladite source (S) et ladite pupille (P) et portés par lesdits moyens de support (5, 6), et
- des moyens moteurs (M) connectés auxdits moyens de support (5, 6) pour déplacer ces derniers d'une manière commandée,
**caractérisé en ce que** ladite embase (1) et lesdits moyens de support mobiles (5, 6) sont connectés les uns aux autres par l'intermédiaire d'au moins une paire de lames flexibles (4, 3) formant avec eux une monture sensiblement plane (2; 11) définissant un plan général (Q),
- **en ce que** les lames flexibles (4, 3) de ladite paire sont alignées respectivement sur deux axes (A4, A5) concourant à partir de ladite embase (1) vers un point d'intersection (C) situé dans ledit plan (Q), lesdites lames étant connectées auxdits moyens de support (5, 6) en deux points respectifs intermédiaires entre ladite embase et le point d'intersection (C) desdites axes, et
**en ce que** lesdits moyens de pointage (7) sont agencés pour dévier ledit faisceau (F) de manière variable dans un plan qui est parallèle au plan (Q) de ladite monture (2; 11) par déplacement desdits moyens de support (5, 6).

2. Actionneur suivant la revendication 1, **caractérisé en ce que** ladite paire de lames (3, 4) définit avec ladite embase (1) et lesdits moyens de support (5, 6), un quadrilatère (E1 à E4) dans le plan général (Q) de ladite monture (2;11).

3. Actionneur suivant la revendication 2, **caractérisé en ce que** ledit quadrilatère (E1 à E4) est un trapèze.

4. Actionneur suivant la revendication 3, **caractérisé en ce que** ledit trapèze (E1 à E4) est isocèle.

5. Actionneur suivant l'une quelconque des revendications précédentes, **caractérisé en ce que** lesdits moyens de pointage optique comprennent un miroir (7) monté sur ladite monture (2; 11) porté par lesdits moyens de support (5, 6) et orientés dans un plan perpendiculaire au plan général (P) de ladite monture (2; 11).

6. Actionneur suivant la revendication 5, **caractérisé en ce que** lesdits moyens de support comprennent une portion de liaison (5) connectée entre deux extrémités (E3, E4) desdites lames (3, 4) et **en ce que** ledit miroir (7) est monté sur un appendice (6) solidaire de ladite portion de liaison (5) et s'étendant entre lesdites lames (3, 4) en direction de ladite embase (1).

7. Actionneur suivant l'une quelconque des revendications précédentes, **caractérisé en ce que** lesdites lames (3, 4) forment une paire de premières lames, et **en ce qu'**il comprend également une paire de secondes lames flexibles (14, 15) situées également dans le plan de la monture (11) et dont les axes passent par ledit point d'intersection (C) des premières lames flexibles (3, 4), ces secondes lames (14, 15) étant connectées auxdits moyens de support (5) et s'étendant à partir de ceux-ci en direction de ladite embase (1) où elles sont connectées l'une à l'autre par une traverse mobile (13) dont sont solidaires lesdits moyens de pointage optique (7) et lesdits moyens moteurs (M).

8. Actionneur suivant l'une quelconque des revendications 1 à 4, **caractérisé en ce que** lesdits moyens de pointage optique comprennent un guide de lumière, tel qu'une fibre optique dont l'une des extrémités est connectée à ladite source de lumière (S) et dont l'autre extrémité est fixée sur lesdits moyens de support en alignement avec une lentille convergente (L), et **en ce que** ladite autre extrémité du guide de lumière et ladite lentille définissent un axe optique situé dans le plan de ladite monture de manière à être aligné sur ladite pupille.

9. Actionneur destiné à diriger sous un angle d'incidence variable (α), un faisceau de lumière (F) provenant d'une source lumineuse (S) sur une pupille (P) placée dans une région prédéterminée (R) de l'espace, comprenant
- une embase fixe (1),
- des moyens de support (5) montés mobiles par rapport à cette embase (1),
- des moyens moteurs (M) connectés auxdits moyens de support (5) pour déplacer ces derniers d'une manière commandée,
**caractérisé en ce que**:
- ladite embase (1) et lesdits moyens de support mobiles (5) sont connectés les uns aux autres par l'intermédiaire de quatre lames flexibles (4, 3, 33, 44) qui sont alignées respectivement sur quatre axes situés sur les arêtes d'une pyramide à base carrée au sommet de laquelle est située ladite pupille (P), lesdites lames étant connectées auxdits moyens de support (5) en quatre points respectifs intermédiaires entre ladite embase et le sommet de ladite pyramide, et **en ce qu'**il comprend
- des moyens de pointage optique comprenant un guide de lumière, tel qu'une fibre optique dont l'une des extrémités est connectée à ladite source de lumière (S) et dont l'autre extrémité est fixée sur lesdits moyens de support en alignement avec une lentille convergente (L), ladite autre extrémité du guide de lumière et ladite lentille définissent un axe optique situé dans le plan de ladite monture de manière à être aligné sur ladite pupille de telle sorte que lesdits moyens de pointage puissent être déplacés selon une portion de sphère.

## Claims

1. An actuator adapted to direct a light beam (F) from a light source (S) at a variable angle of incidence (α) onto a pupil (P) in a predetermined region of space (R), comprising:
- a fixed base (1),
- support means (5, 6) mounted to be mobile relative to said base (1),
- optical means (7) for pointing said beam on the path thereof between said source (S) and said pupil (P) and carried by said support means (5, 6), and
- motor drive means (M) connected to said support means (5, 6) to move them in a controlled manner,
- **characterized in that** said base (1) and said mobile support means (5, 6) are connected to each other by at least one pair of flexible blades (4, 3) forming with them a substantially plane mount (2; 11) defining a general plane (Q),
- **in that** the flexible blades (4, 3) of said pair are respectively aligned with two axes (A4, A5) extending from said base (1) toward a point of intersection (C) in said plane (Q), said blades being connected to said support means (5, 6) at two respective points between said base and said point of intersection (C) of said axes, and
**in that** said pointing means (7) are adapted to deflect said beam (F) in a variable manner in a plane parallel to said plane (Q) of said mount (2; 11) by moving said support means (5, 6).

2. The actuator claimed in claim 1, **characterised in that** said pair of blades (3, 4) defines with said base (1) and said support means (5, 6) a quadrilateral (E1-E4) in said general plane (Q) of said mount (2, 11).

3. The actuator claimed in claim 2, **characterized in that** said quadrilateral (E1-E4) is a trapezium.

4. The actuator claimed in claim 3, **characterized in that** said trapezium (E1-E4) is an isosceles trapezium.

5. The actuator claimed in any one of the preceding claims, **characterized in that** said optical pointing means comprise a mirror (7) mounted on said mount (2; 11), carried by said support means (5, 6) and oriented in a plane perpendicular to the general plane (P) of said mount (2; 11).

6. The actuator claimed in claim 5, **characterized in that** said support means comprise a connecting portion (5) connected between two ends (E3, E4) of said blades (3, 4) and **in that** said mirror (7) is mounted on an appendix (6) fastened to said connecting portion (5) and extending between said blades (3, 4) toward said base (1).

7. The actuator claimed in any one of the preceding claims, **characterized in that** said blades (3, 4) form a pair of first blades and **in that** it further comprises a pair of second flexible blades (14, 15) also in said plane of said mount (11) and having axes passing through said point of intersection (C) of said first flexible blades (3, 4), said second blades (14, 15) being connected to said support means (5) and extend therefrom toward said base (1) where they are connected together by a mobile crossmember (13) to which said optical pointing means (7) and said motor drive means (M) are fastened.

8. The actuator claimed in any one of claims 1-4, **characterized in that** said optical pointing means comprise an optical waveguide such as an optical fiber one end of which is connected to said light source (S) and the other end of which is fixed to said support means and aligned with a convergent lens (L) and **in that** said other end of said optical waveguide and said lens define an optical axis in the plane of said mount so as to be aligned with said pupil.

9. An actuator adapted to direct a light beam (F) from a light source (S) at a variable angle (α) of incidence onto a pupil (P) in a predetermined region of space (R), comprising:
- a fixed base (1),
- support means mounted (5) to be mobile relative to said base (1),
- motor drive means (M) connected to said support means (5) to move them in a controlled manner,
**characterized in that** said base (1) and said mobile support means (5) are connected to each other by four flexible blades (4, 3, 33, 44) respectively aligned with four axes on the edges of a pyramid on a square base at whose apex said pupil (P) is located, said blades being connected to said support means (5) at four respective points between said base and said summit of said pyramid, and **in that** it comprises
- optical pointing means comprising an optical waveguide such as an optical fiber one end of which is connected to said light source (S) and the other end of which is fixed to said support means and aligned with a convergent lens (L), said other end of said waveguide and said lens defining an optical axis in the plane of said mount so as to be aligned with said pupil so that said pointing means can be moved over a portion of a sphere.

## Patentansprüche

1. Stellglied zum Richten eines von einer Lichtquelle (S) kommenden Lichtstrahls (F) auf eine in einem vorgegebenen Bereich (R) des Raumes angeordnete Pupille (P) unter einem veränderlichen Einfallwinkel (α), mit:
- einer ortsfesten Basis (1)
- Abstützmitteln (5, 6), die bezüglich dieser Basis (1) beweglich gelagert sind,
- optischen Mitteln (7) zum Lenken des Lichtstrahls, die auf der Bahn desselben zwischen der Lichtquelle (S) und der Pupille (P) angeordnet sind und von den Abstützmitteln (5, 6) getragen werden, und
- Motormitteln (M), die mit den Abstützmitteln (5, 6) verbunden sind, um die letzteren in gesteuerter Weise zu verstellen,
**dadurch gekennzeichnet,**
**dass** die Basis (1) und die beweglichen Abstützmittel (5, 6) untereinander mittels mindestens eines Paares flexibler Lamellen (4, 3) verbunden sind, die miteinander eine im wesentlichen ebene Fassung (2; 11) bilden, welche eine allgemeine Ebene (Q) definiert,
**dass** die flexiblen Lamellen (4, 3) des besagten Paares zu zwei Achsen (A4, A5) ausgerichtet sind, die ausgehend von der Basis (1) in einem in der besagten Ebene (Q) angeordneten Schnittpunkt (C) zusammenlaufen, wobei die Lamellen mit den Abstützmitteln (5, 6) an zwei entsprechenden Zwischenpunkten zwischen der Basis und dem Schnittpunkt (C) der beengten Achsen verbunden sind, und
**dass** die Lenkmittel (7) so ausgebildet sind, dass sie den Lichtstrahl (F) durch Verstellen der Abstützmittel (5, 6) in veränderlicher Weise in eine zu der Ebene (Q) der Fassung (2; 11) parallele Ebene ablenken.

2. Stellglied nach Anspruch 1, **dadurch gekennzeichnet, dass** das Lamellenpaar (3, 4) mit der Basis (1) und den Abstützmitteln (5, 6) ein Viereck (E1 bis E4) in der allgemeinen Ebene (Q) der Fassung (2; 11) definiert.

3. Stellglied nach Anspruch 2, **dadurch gekennzeichnet, dass** das Viereck (E1 bis E4) ein Trapez ist.

4. Stellglied nach Anspruch 3, **dadurch gekennzeichnet, dass** das Trapez (E1 bis E4) gleichschenkelig ist.

5. Stellglied nach einem der vorhergehenden Ansprüche, **dadurch gekennzeichnet, dass** die optischen Lenkmittel einen Spiegel (7) ausweisen, der an der von den Abstützmitteln (5, 6) getragenen Fassung (2; 11) angebracht und in einer Ebene senkrecht zu der allgemeinen Ebene (Q) der Fassung (2; 11) ausgerichtet ist.

6. Stellglied nach Anspruch 5, **dadurch gekennzeichnet, dass** die Abstützmittel einen Verbindungsabschnitt (5) aufweisen, der die beiden Enden (E3, E4) der Lamellen (3, 4) miteinander verbindet, und dass der Spiegel (7) an einem Ansatz (6) angebracht ist, der mit dem Verbindungsabschnitt (5) integral ausgebildet ist und sich zwischen den Lamellen (3, 4) in Richtung der Basis (1) erstrecken.

7. Stellglied nach einem der vorhergehenden Ansprüche, **dadurch gekennzeichnet, dass** die Lamellen (3, 4) ein erstes Lamellenpaar bilden und dass es ferner ein Paar zweiter flexibler Lamellen (14, 15) aufweist, die ebenfalls in der Ebene der Fassung (11) angeordnet sind und deren Achsen durch den Schnittpunkt (C) der ersten flexiblen Lamellen (3,4) verlaufen, wobei diese zweiten Lamellen (14, 15) mit den Abstützmitteln (5) verbunden sind und ausgehend von diesen in Richtung der Basis (1) verlaufen, wo sie untereinander durch eine bewegliche Traverse (13) verbunden sind, mit denen die optischen Lenkmittel (7) und die Motormittel (M) integral verbunden sind.

8. Stellglied nach einem der Ansprüche 1 bis 4, **dadurch gekennzeichnet, dass** die optischen Lenkmittel eine Lichtführung wie eine optische Faser aufweisen, deren ein Ende mit der Lichtquelle (S) verbunden ist und deren anderes Ende an den Abstützmitteln ausgerichtet zu einer konvergenten Linse (L) festgelegt ist, und dass das andere Ende der Lichtführung und die Linse eine optische Achse definieren, die in der Ebene der Fassung so angeordnet ist, dass sie zu der Pupille ausgerichtet ist.

9. Stellglied zum Richten eines von einer Lichtquelle (S) kommenden Lichtstrahls (F) auf eine in einem vorgegebenen Bereich (R) des Raumes angeordnete Pupille (P) unter einem veränderlichen Einfallwinkel (α), mit:
- einer ortsfesten Basis (1),
- Abstützmitteln (5), die bezüglich dieser Basis (1) beweglich gelagert sind,
- Motormitteln (M), die mit den Abstützmitteln (5) verbunden sind, um die letzteren in gesteuerter Weise zu verstellen,
**dadurch gekennzeichnet, dass**:
die Basis (1) und die beweglichen Abstützmittel (5) untereinander mittels vier flexibler Lamellen (4, 3, 33, 44) verbunden sind, die zu vier Achsen ausgegrichtet sind, welche an den Seitenkanten einer Pyramide mit quadratischer Grundfläche angeordnet sind, an deren Spitze die Pupille (P) angeordnet ist, wobei die Lamellen mit den Abstützmitteln (5) an vier entsprechenden Zwischenpunkten zwischen der Basis und der Spitze der Pyramide verbunden sind, und
dass es aufweist:
optische Lenkmittel mit einer Lichtführung wie einer optischen Faser, deren ein Ende mit der Lichtquelle (S) verbunden ist und deren anderes Ende an den Abstützmitteln ausgerichtet zu einer konvergenten Linse (L) befestigt ist, wobei das besagte andere Ende der Lichtführung und die Linse eine optische Achse definieren, die in der Ebene der Fassung ausgerichtet zu der Pupille angeordnet ist, derart, dass die Lenkmittel längs eine sphärischen Abschnitts vorstellbar sind.
